# EUROPEAN PATENT APPLICATION

(11) **EP 4 845 253 A1**
(43) Date of publication of application: **25.11.2026**
(21) Application number: 24925887.2
(22) Date of filing: 22.02.2024
(51) Int. Cl.: H04W 64/00, H04W 24/10

(54) **INFORMATION PROCESSING DEVICE, INFORMATION PROCESSING METHOD, AND INFORMATION PROCESSING PROGRAM**

(71) Applicant: Softbank Corp., Tokyo 105-7529 (JP)
(72) Inventor: EBISAWA, Norikazu, Tokyo 105-7529 (JP); YABUKI, Ayumu, Tokyo 105-7529 (JP)
(74) Representative: SSM Sandmair
(86) International application number: PCT/JP2024/006611
(87) International publication number: WO 2025/177556

(57) **Abstract**

An information processing apparatus (100) according to the present application is a RAN Intelligent Controller (RIC). Specifically, the information processing apparatus (100) includes a storage unit (121), an acquisition unit (131), and an estimation unit (133). The storage unit (121) stores therein association information in which location information on a first moving body apparatus is associated with a first control message that is a control message that is used to maintain wireless communication between the first moving body apparatus and a base station. The acquisition unit (131) acquires a second control message that is the control message between a second moving body apparatus that is different from the first moving body apparatus and the base station. The estimation unit (133) estimates location information on the second moving body apparatus by using the second control message and the association information.

## Description

### Field

The present invention relates to an information processing apparatus, an information processing method, and an information processing program.

### Background

Conventionally, there is a known technology for acquiring location information on a terminal device without passing through a server in a case where a base station is able to acquire the location information on the terminal device from the terminal device itself.

### Citation List

### Patent Literature

Patent Literature 1: Japanese Patent No. 6240655

### Summary

### Technical Problem

However, with the above described conventional technology, the location information on the terminal device corresponding to a specific architecture is merely acquired, and there is a room for improvement in terms of expandability toward the fifth generation mobile communication system (5^{th} Generation; 5G).

The present application has been conceived in light of the circumstances described above and an object thereof is to estimate location information on a moving body apparatus on the basis of a predetermined control message.

### Solution to Problem

According to an example of a subject matter described in a present disclosure, an information processing apparatus includes: a storage unit that stores therein association information in which location information on a first moving body apparatus is associated with a first control message that is a control message that is used to maintain wireless communication between the first moving body apparatus and a base station; an acquisition unit that acquires a second control message that is the control message between a second moving body apparatus that is different from the first moving body apparatus and the base station; and
an estimation unit that estimates location information on the second moving body apparatus by using the second control message and the association information.

### Advantageous Effects of Invention

According to one aspect of an embodiment, an advantage is provided in that it is possible to estimate location information on a moving body apparatus on the basis of a predetermined control message.

### Brief Description of Drawings

FIG. 1 is a diagram illustrating one example of an information processing system according to an embodiment.
FIG. 2 is a diagram illustrating one example of an estimation process performed by the information processing apparatus according to the embodiment.
FIG. 3 is a diagram illustrating an example of a configuration of the information processing apparatus according to the embodiment.
FIG. 4 is a diagram illustrating one example of an association information storage unit according to the embodiment.
FIG. 5 is a diagram illustrating one example of an estimation location information storage unit according to the embodiment.
FIG. 6 is a flowchart illustrating one example of the flow of a generation process performed by the information processing apparatus according to the embodiment.
FIG. 7 is a flowchart illustrating one example of the flow of an estimation process performed by the information processing apparatus according to the embodiment.
FIG. 8 is a hardware configuration diagram illustrating one example of a computer that implements a function of the information processing apparatus.

### Description of Embodiments

Hereinafter, a mode (hereinafter, referred to as an "embodiment") for carrying out an information processing apparatus, an information processing method, and an information processing program according to the present application will be described in detail below with reference to the accompanying drawings. Moreover, the information processing apparatus, the information processing method, and the information processing program according to the present application are not limited by the embodiment. Furthermore, each of the embodiments can be appropriately used in combination as long as the content of processes does not conflict with each other. Furthermore, in the embodiments below, the same components are denoted by the same reference numerals and an overlapping description will be omitted.

### [1. Introduction]

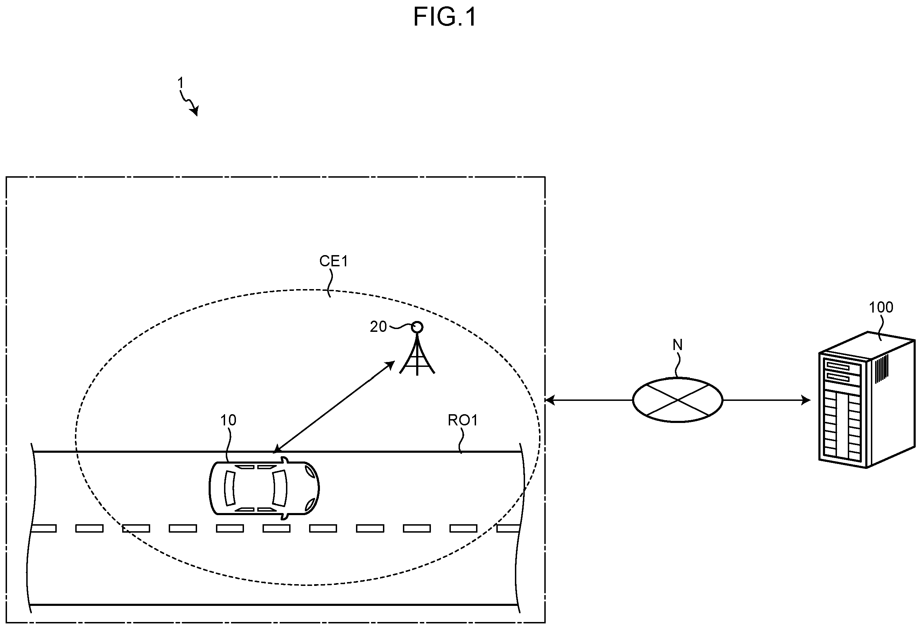

First, an outline of the embodiment will be explained with reference to FIG. 1. FIG. 1 is a diagram illustrating one example of an information processing system 1 according to the embodiment. As illustrated in FIG. 1, the information processing system 1 includes an automobile (one example of a moving body apparatus) 10, a base station 20, and an information processing apparatus 100. The automobile 10, the base station 20, and the information processing apparatus 100 are communicably connected one another via a network N, such as the Internet, in a wireless manner.

The automobile 10 is a connected car that communicates with the other various kinds of devices via wireless communication. Furthermore, the automobile 10 includes an in-vehicle device. For example, the in-vehicle device has a communication module, and performs communication with the base station 20 and the information processing apparatus 100 by using the communication module. In the example illustrated in FIG. 1, the automobile 10 communicates with the other various kinds of devices via the network N. Furthermore, in the example illustrated in FIG. 1, the automobile 10 is running on a road RO1.

Furthermore, the in-vehicle device has a function for detecting a current location on the in-vehicle device by using a Global Positioning System (GPS) sensor, or the like, at a predetermined interval (for example, once or more per second). As a result of this, the in-vehicle device detects the current location of the automobile 10. Here, the current location is indicated by a latitude, a longitude, and the like. For example, the in-vehicle device is a car navigation system, a drive recorder, or the like. Moreover, the location information indicated below is the location information that has been detected by the GPS sensor.

The base station 20 is an information processing apparatus that manages a cell CE1 on the basis of, for example, a wireless communication architecture, such as Long Term Evolution (LTE), LTE-Advanced, New Radio (NR), or 6G. In this case, the base station 20 provides wireless communication to the automobile 10 that is located inside the cell CE1.

The information processing apparatus 100 is implemented by, for example, a server device, such as Multi-access Edge Computing (MEC), or a cloud system, or the like. Specifically, the information processing apparatus 100 estimates the location information on the automobile 10 whose location information is unknown by using association information in which the location information on the automobile 10 is associated with a first control message that is a control message that is used to maintain the wireless communication between the automobile 10 and the base station 20, and also using a second control message that is a control message that is used to maintain the wireless communication between the automobile 10 whose location information is unknown and the base station 20.

Furthermore, the information processing apparatus 100 is a Radio Access Network (RAN) Intelligent Controller (RIC). The RIC is an information processing apparatus that performs estimation on various kinds of information or the like on the basis of predetermined calculation resources for the RAN, Artificial Intelligence (AI), or the like. Moreover, the information processing apparatus 100 may be an information processing apparatus that is located inside a core network.

Conventionally, in an acquisition method for acquiring the location information on the terminal device, or the like that is located inside the cell that is managed by the base station 20, the acquisition method has been limited, such as acquiring the location information on the terminal device on the basis of a specific architecture. Specifically, in a case where the above described acquisition method is used in the fifth generation mobile communication system (5^{th} Generation; 5G), there is a need to newly add a function to the terminal device.

For example, in 3GPP (registered trademark) TS38.305, the architectures of DownLink (DL)-Time Difference of Arrival (TDOA), DL-Arrival of Departure (AoD), Multiple-Round Trip Time (Multi-RTT), NR Enhanced Cell-ID (E-CID), UpLink (UL)-TDOA, UL-AoA, and the like are defined as a specific architecture. As a result of this, in a case where the location information is acquired on the basis of the above described architecture, there is a need to add a functional support for the terminal device. In this way, conventionally, there is a need to newly add the function to the terminal device, so that there has been room for improvement in terms of expandability. Furthermore, even if one of the above described architectures has been adopted, there are aspects that depend on each of the architectures, so that there is a possibility that spread of the adoption of the terminal device remains limited.

Accordingly, the present application provides means for solving the above described problem by estimating location information using a function that has already been supported by the terminal device. For example, a control message (for example, a Radio Resource Control (RRC) message, etc.) that is used to maintain the wireless communication between the automobile 10 that is one example of the terminal device and the base station 20 is used. More specifically, as such a control message, a measurement report is used. In this way, the present application provides a solution for estimating the location information on the automobile 10 on the basis of an already existing control message.

In the following, an explanation will be made by using an example in which the information processing apparatus 100 estimates the location information on the automobile 10 whose location information is unknown by using the association information in which the location information on the automobile 10 is associated with the measurement report that has been acquired from the automobile 10, and also using the measurement report that has been acquired from the automobile 10 whose location information is unknown.

Moreover, in the following, each of the different automobiles is referred to as an automobile 1N, and in a case where the automobile 1N is not particularly distinguished, an automobile is referred to as the automobile 10.

### [2. One example of estimation process performed by information processing apparatus]

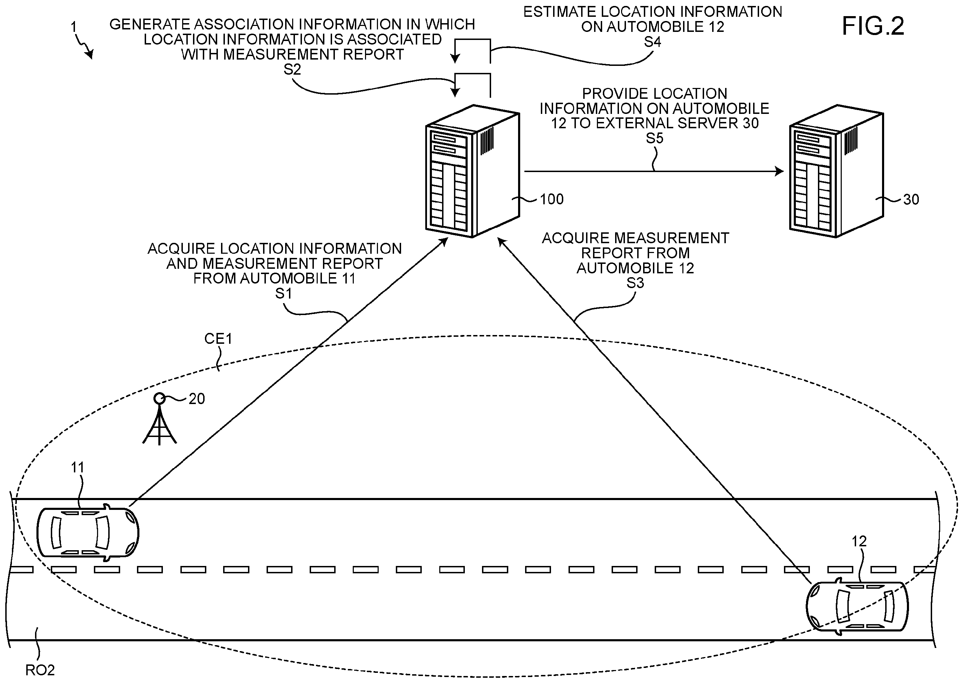

Next, one example of an estimation process performed by the information processing apparatus 100 will be explained with reference to FIG. 2. FIG. 2 is a diagram illustrating one example of the estimation process performed by the information processing apparatus 100 according to the embodiment.

As illustrated in FIG. 2, the information processing system 1 includes an automobile 11, an automobile 12, the base station 20, an external server 30, and the information processing apparatus 100. Here, the automobiles 11 and 12, the base station 20, the external server 30, and the information processing apparatus 100 are communicably connected by a network (not illustrated) in a wireless manner. Here, explanations of the automobiles 11 and 12, the base station 20, and the information processing apparatus 100 will be omitted.

The external server 30 is an information processing apparatus that controls various kinds of applications, and is implemented by, for example, a server device, a cloud system, or the like. Specifically, in a case where the external server 30 has acquired the location information on the automobile 12 from the information processing apparatus 100, the external server 30 uses the acquired location information in the various kinds of applications.

In the example illustrated in FIG. 2, the base station 20 provides wireless communication to the automobiles 11 and 12 that are located inside the cell CE1. Furthermore, in the example illustrated in FIG. 2, the automobiles 11 and 12 are running on a road RO2. In such a case, in the following, a generation process for generating the association information in which the location information on the automobile 11 is associated with the measurement report that has been acquired from the automobile 11 will be explained with reference to FIG. 2. Then, the estimation process for estimating the location information on the automobile 12 whose location information is unknown will be explained with reference to FIG. 2.

First, the generation process for generating the association information in which the location information on the automobile 11 is associated with the measurement report that has been acquired from the automobile 11 will be explained by using Steps S1 and S2 illustrated in FIG. 2. In the example illustrated in FIG. 2, the information processing apparatus 100 acquires the location information and the measurement report (one example of a first measurement report) from the automobile 11 (Step S1).

For example, the information processing apparatus 100 acquires, as the location information, the location information that is related to the automobile 11 and that has been detected by the GPS sensor held by the in-vehicle device that is mounted on the automobile 11. Furthermore, the information processing apparatus 100 acquires a cell ID (Identifier) that is an identifier for identifying the cell CE1, information that indicates Reference Signal Received Power (RSRP) that is received power of a reference signal, information that indicates Reference Signal Received Quality (RSRQ) that is reception quality of the reference signal, and the like from among the pieces of data included in the measurement report. For example, the information processing apparatus 100 may acquire the location information on the GPS, the cell ID, information that indicates the RSRP, and the like as various kinds of application data from the external server 30. In this case, the external server 30 acquires the location information on the GPS, the cell ID, the information that indicates the RSRP, and the like, and stores the acquired pieces of information.

Furthermore, the information processing apparatus 100 further acquires a Physical Cell Identifier (PCI) that is a physical cell ID, and the like from among the pieces of data included in the measurement report. Furthermore, the information processing apparatus 100 further acquires a New Radio Cell Global Identifier (NRCGI) that is a cell ID that is a globally and uniquely identifiable cell all over the world from the core network. For example, the information processing apparatus 100 acquires the NRCGI by carrying out an inquiry with respect to a Network Exposure Function (NEF) on the basis of an identifier, such as a Subscription Permanent Identifier (SUPI) of the automobile 11.

Subsequently, the information processing apparatus 100 generates the association information in which the location information is associated with the measurement report (Step S2). For example, the information processing apparatus 100 generates the association information in which the location information on the automobile 10, the cell ID, the RSRP, and the like are associated with each other.

Next, the estimation process for estimating the location information on the automobile 12 whose location information is unknown will be explained by using Step S3 and S4 illustrated in FIG. 2. In the example illustrated in FIG. 2, the information processing apparatus 100 acquires a measurement report (one example of a second measurement report) from the automobile 12 (Step S3). For example, the information processing apparatus 100 acquires the measurement report from the automobile 12 by using the Measurement Report defined by the RRC that is prescribed in TS38.331.

For example, the information processing apparatus 100 acquires the cell ID that is the identifier for identifying the cell CE1, the information that indicates the RSRP, the information that indicates the RSRQ, and the like from among the pieces of data included in the measurement report. Furthermore, the information processing apparatus 100 further acquires the NRCGI and the like from the core network.

Subsequently, the information processing apparatus 100 uses the measurement report that has been acquired from the automobile 12 and the association information, and estimates the location information on the automobile 12 (Step S4). For example, in a case where a difference between the RSRP that is included in the association information and the RSRP that is included in the measurement report acquired from the automobile 12 is within the range of a predetermined value, the information processing apparatus 100 decides the location information corresponding to the RSRP included in the association information as the location information on the automobile 12. In this way, the information processing apparatus 100 estimates the location information on the automobile 12.

In such a case, the information processing apparatus 100 provides the location information on the automobile 12 to the external server 30 (Step S5). At this time, in a case where the information processing apparatus 100 has provided the location information on the automobile 12, the external server 30 uses the acquired location information on the automobile 12 in the various kinds of application.

Conventionally, in a case where the base station is able to acquire the location information on the terminal device from the terminal device itself, there is a known technology for acquiring the location information on the terminal device without passing through a server. However, with the above described conventional technology, the location information on the terminal device corresponding to a specific architecture is merely acquired, there has been a room for improvement in terms of expandability toward 5G.

Accordingly, the information processing apparatus 100 estimates the location information on the automobile 10 by using the measurement report that has been acquired from the automobile 12, and also using the association information in which the location information on the automobile 11 is associated with the measurement report that has been acquired from the automobile 11. In this way, the information processing apparatus 100 is able to estimate the location information on the automobile 10 on the basis of the measurement report. As a result of this, the information processing apparatus 100 is able to improve the usability with respect to the user who uses the automobile 10. For example, by estimating the location information, the information processing apparatus 100 is able to determine whether the automobile 10 is present inside a building (in other words, whether a moving range of the automobile 10 is small), or whether the automobile 10 is present on a road (in other words, whether a moving range of the automobile 10 is large). In this way, the information processing apparatus 100 is able to determine what kind of place the automobile 10 is located.

In this case, it is assumed that the information processing apparatus 100 provides, to the base station 20, the information that is related to the place in which the automobile 10 is located with respect to the base station 20. At this time, the base station 20 will be able to allocate, with priority, the bands suitable for the automobile 10. For example, the base station 20 allocates a small band to the automobile 10 with a large moving range, whereas the base station 20 allocates a high band to the automobile 10 with a small moving range. In this way, the information processing apparatus 100 is able to contribute to improving usability.

Furthermore, the information processing apparatus 100 is able to contribute to improving stability of the carrier network. For example, the information processing apparatus 100 is able to obtain a density of the automobiles 10 for each region in which the automobiles 10 are located by estimating the location information on each of the automobiles 10. In this case, it is assumed that the information processing apparatus 100 provides, to the base station 20, the information related to the density of the automobiles 10 for each region with respect to the base station 20. At this time, the base station 20 is able to direct a beam toward the region in which the density of the automobiles 10 is high. In this way, the information processing apparatus 100 is able to contribute to improving accommodation capacity of the automobiles 10.

### [3. Configuration of information processing apparatus]

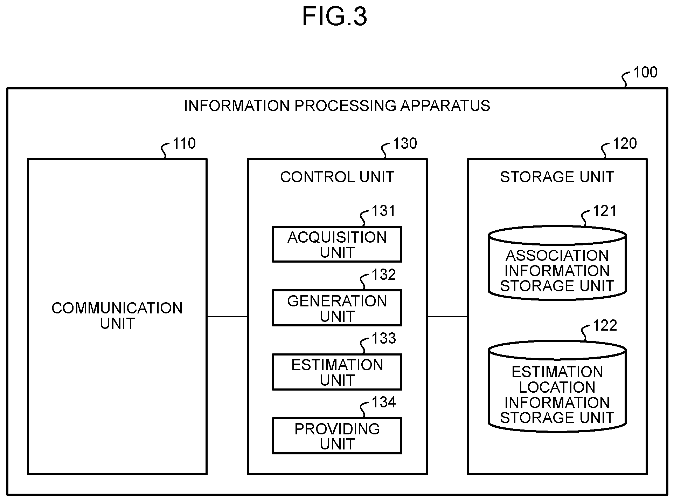

Next, a configuration of the information processing apparatus 100 according to the embodiment will be explained with reference to FIG. 3. FIG. 3 is a diagram illustrating an example of the configuration of the information processing apparatus 100 according to the embodiment. As illustrated in FIG. 3, the information processing apparatus 100 includes a communication unit 110, a storage unit 120, and a control unit 130.

### (Regarding communication unit 110)

The communication unit 110 is implemented by, for example, a Network Interface Card (NIC), or the like. In addition, the communication unit 110 performs transmission and reception of information with various kinds of devices via the network N.

### (Regarding storage unit 120)

The storage unit 120 is implemented by, for example, a semiconductor memory device, such as a Random Access Memory (RAM) or a flash memory, or a storage device, such as a hard disk or an optical disk. For example, the storage unit 120 includes an association information storage unit 121 and an estimation location information storage unit 122.

### (Regarding association information storage unit 121)

The association information storage unit 121 stores therein the association information in which the location information on the automobile 10 is associated with the control message that is used to maintain the wireless communication between the automobile 10 and the base station 20. For example, the association information storage unit 121 stores therein the association information in which the location information on the automobile 10 is associated with the measurement report that has been acquired from the automobile 10.

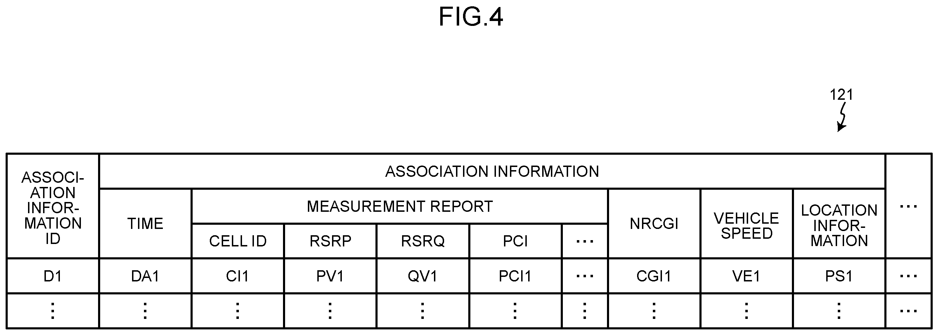

Here, one example of the association information storage unit 121 according to the embodiment is illustrated in FIG. 4. In the example illustrated in FIG. 4, the association information storage unit 121 has items of "association information ID", "association information", and the like.

For example, the "association information" has items of "time", a "measurement report", a "NRCGI", a "vehicle speed", "location information", and the like. Furthermore, the "measurement report" includes items of a "cell ID", "RSRP", "RSRQ", a "PCI", and the like.

The "association information ID" is an identifier for identifying the association information. For example, the association information ID is an identifier for identifying the automobile 10 located inside the 5G system. To give a more specific example, the association information ID is a SUPI, a Generic Public Subscription Identifier (GPSI), or the like. The "time" is information related to the time at which the measurement report acquired from the automobile 10 that is associated with the "association information ID" is acquired.

The "cell ID" is an identifier for identifying a cell that is included in the measurement report that has been acquired from the automobile 10 that is associated with the "association information ID". The base station included in the measurement report mentioned here is the base station that performs wireless communication with the automobile 10, another base station that is adjacent to the base station that performs wireless communication with the automobile 10, or the like. That is to say, the cell ID is an identifier for identifying the cell that is managed by the base station that performs wireless communication with the automobile 10, or an identifier for identifying the cell that is managed by the other base station and that is adjacent to the base station.

The "RSRP" is information that indicates the received power of the reference signal included in the measurement report that has been acquired from the automobile 10 that is associated with the "association information ID". The "RSRQ" is information that indicates the reception quality of the reference signal included in the measurement report that has been acquired from the automobile 10 that is associated with the "association information ID".

The "PCI" is a physical cell ID that is included in the measurement report that has been acquired from the automobile 10 that is associated with the "association information ID". The "NRCGI" is the cell ID that is a globally and uniquely identifiable cell all over the world and that is included in the measurement report that has been acquired from the automobile 10 that is associated with the "association information ID".

The "vehicle speed" is information that is related to a vehicle speed that has been acquired from the automobile 10 that is associated with the "association information ID". Moreover, the information related to the vehicle speed may include the information that is related to the traveling direction, in addition to the information related to the speed of the automobile 10. The "location information" is the location information that has been acquired from the automobile 10 that is associated with the "association information ID".

For example, in FIG. 4, the "D1" identified by the association information ID indicates that the time is "DA1" and the cell ID is "CI1". Furthermore, the "D1" indicates that the RSRP is "PV1", the RSRQ is "QV1", the PCI is "PCI1", the NRCGI is "CGI1", the vehicle speed is "VE1", the location information is "PS1".

Moreover, In the example illustrated in FIG. 4, the time and the like are represented by abstract signs, but the time and the like may be a specific value that indicates the time or the like, a specific file format including the time, or the like.

### (Regarding estimation location information storage unit 122)

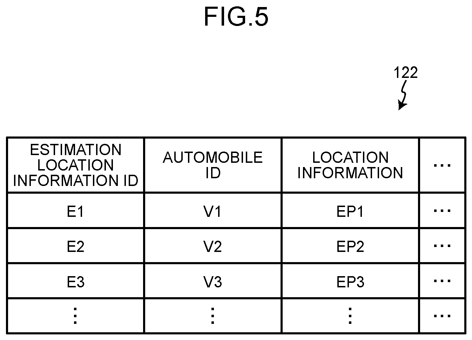

The estimation location information storage unit 122 stores therein the estimated location information on the automobile 10. Here, one example of the estimation location information storage unit 122 according to the embodiment is illustrated in FIG. 5. In the example illustrated in FIG. 5, the estimation location information storage unit 122 has items of an "estimation location information ID", an "automobile ID", "location information", and the like.

The "estimation location information ID" is an identifier for identifying the estimated location information. The "automobile ID" is an identifier for identifying the automobile 10 that is associated with the estimated location information that is associated with the "estimation location information ID". For example, the automobile ID is the SUPI, the GPSI, or the like. The "location information" is estimated location information that is associated with the "estimation location information ID".

For example, in FIG. 5, "E1" identified by the estimation location information ID indicates that the automobile ID is "V1", and the location information is "EP1". Moreover, in the example illustrated in FIG. 5, the location information is represented by an abstract sign, but the location information may be a specific value, or the like.

### (Regarding control unit 130)

The control unit 130 is a controller (Controller), and is implemented by, for example, a Central Processing Unit (CPU), a Micro Processing Unit (MPU), or the like executing various kinds of programs (one example of an information processing program), which are stored in a storage device included in the information processing apparatus 100, by using a RAM as a work area. Furthermore, the control unit 130 is a controller, and is implemented by, for example, an integrated circuit, such as an Application Specific Integrated Circuit (ASIC) or a Field Programmable Gate Array (FPGA).

As illustrated in FIG. 3, the control unit 130 includes an acquisition unit 131, a generation unit 132, an estimation unit 133, and a providing unit 134, and implements or performs the function or the operation of the information processing explained below. Moreover, the internal configuration of the control unit 130 is not limited to the configuration illustrated in FIG. 3, but another configuration may be used as long as the configuration in which the information process that will be described later is performed. Furthermore, the connection relation between each of the processing units included in the control unit 130 is not limited to the connection relation illustrated in FIG. 3, and another connection relation may be used.

### (Regarding acquisition unit 131)

The acquisition unit 131 acquires various kinds of information. Specifically, the acquisition unit 131 acquires both of the location information and the measurement report from the automobile 10. For example, the acquisition unit 131 acquires, as the location information, the location information that is related to the automobile 10 and that has been detected by the GPS sensor included in the in-vehicle device that is mounted on the automobile 10. Then, the acquisition unit 131 stores the acquired location information in the storage unit 120.

Furthermore, the acquisition unit 131 acquires the cell ID, the information that indicates the RSRP, the information that indicates the RSRQ, the PCI, or the like from among the pieces of data included in the measurement report. Furthermore, the acquisition unit 131 further acquires the NRCGI, or the like from the core network. Then, the acquisition unit 131 stores, in the storage unit 120, the acquired cell ID, the information that indicates the RSRP, the information that indicates the RSRQ, the PCI, the NRCGI, or the like.

Furthermore, the acquisition unit 131 acquires the vehicle speed of the automobile 10 from the automobile 10. For example, it is assumed that the in-vehicle device includes a speed sensor. In this case, the acquisition unit 131 acquires the vehicle speed that has been detected by the speed sensor from the automobile 10. Then, the acquisition unit 131 stores the acquired vehicle speed in the storage unit 120.

### (Regarding generation unit 132)

The generation unit 132 generates various kinds of information. Specifically, the generation unit 132 generates, on the basis of the location information on the automobile 10 and the measurement report that has been acquired from the automobile 10, the association information in which the location information and the measurement report are associated with each other. For example, the generation unit 132 generates the association information in which the location information on the automobile 10 is associated with the cell ID, the RSRP, and the like from among the pieces of data included in the measurement report. Then, the generation unit 132 stores the generated association information in the association information storage unit 121.

### (Regarding estimation unit 133)

The estimation unit 133 estimates the location information on the automobile 10 by using the measurement report that has been acquired from the automobile 10 whose location information is unknown and using the association information that is stored in the association information storage unit 121 by the generation unit 132.

For example, in a case where a difference between the RSRP that is included in the association information and the RSRP that is included in the measurement report that has been acquired from the automobile 10 whose location information is unknown is within the range of the predetermined value, the estimation unit 133 decides the location information corresponding to the RSRP that is included in the association information as the location information on the automobile 10. In this way, the estimation unit 133 estimates the location information on the automobile 10. Then, the estimation unit 133 stores the estimated location information on the automobile 10 in the estimation location information storage unit 122.

Furthermore, as another example, the estimation unit 133 may decide the location information corresponding to the RSRP included in the association information as the location information on the automobile 10, in a case where the cell ID that is included in the association information and the cell ID that is included in the measurement report that has been acquired from the automobile 10 whose location information is unknown are the same, and in a case where a difference between the RSRP that is included in the association information and the RSRP that is included in the measurement report acquired from the automobile 10 is within the range of the predetermined value. In this way, the estimation unit 133 may estimate the location information on the automobile 10. In this case, the estimation unit 133 stores the estimated location information on the automobile 10 in the estimation location information storage unit 122.

Moreover, in the above described embodiment, the explanation has been made as an example in which the estimation unit 133 estimates the location information on the automobile 10 on the basis of the difference between the RSRP that is included in the association information and the RSRP that is included in the measurement report that has been acquired from the automobile 10 whose location information is unknown, but the example is not limited to this example. For example, in the estimation process performed by the estimation unit 133, the RSRQ, or the like may be adopted instead of the RSRP.

### (Regarding providing unit 134)

The providing unit 134 provides various kinds of information. For example, the providing unit 134 provides, to the external server 30, the location information that is related to the automobile 10 and that is stored in the estimation location information storage unit 122 by the estimation unit 133.

### [4. Processing procedure (1)]

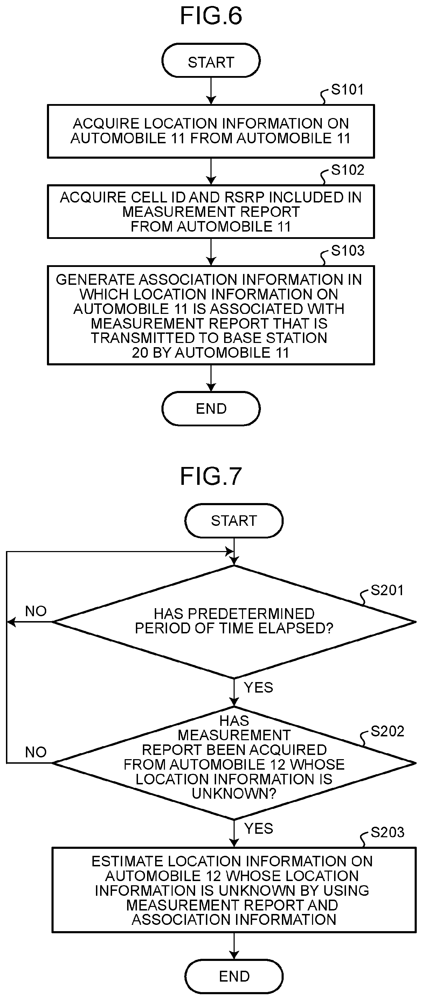

Next, the procedure of the generation process performed by the information processing apparatus according to the embodiment will be explained with reference to FIG. 6. FIG. 6 is a flowchart illustrating one example of the flow of the generation process that is performed by the information processing apparatus according to the embodiment.

As illustrated in FIG. 6, the acquisition unit 131 acquires the location information on the automobile 11 from the automobile 11 (Step S101). Subsequently, the acquisition unit 131 acquires the cell ID and the RSRP included in the measurement report from the automobile 11 (Step S102).

Then, the generation unit 132 generates the association information in which the location information that is related to the automobile 11 and that has been acquired from the acquisition unit 131 is associated with the measurement report that is transmitted to the base station 20 by the automobile 11 (Step S103).

Moreover, in the above described example, Steps S101 and S102 described above are explained as separate Steps, but the example is not limited to this example. For example, Steps S101 and S102 described above may be performed as the same Step.

### [5. Processing procedure (2)]

Next, the procedure of the estimation process performed by the information processing apparatus according to the embodiment will be described with reference to FIG. 7. FIG. 7 is a flowchart illustrating one example of the flow of the estimation process performed by the information processing apparatus according to the embodiment.

As illustrated in FIG. 7, the information processing apparatus 100 determines whether or not a predetermined period of time has elapsed (Step S201). The predetermined period of time mentioned here indicates, for example, a time interval in which the automobile 10 transmits the measurement report to the base station 20.

For example, in a case where the information processing apparatus 100 determines that the predetermined period of time has not elapsed (No at Step S201), the information processing apparatus 100 stands by util the predetermined period of time has elapsed.

On the other hand, in a case where the information processing apparatus 100 determines that the predetermined period of time has not elapsed (Yes at Step S201), the acquisition unit 131 acquires the measurement report from the automobile 12 whose location information is unknown (Step S202).

For example, in a case where the acquisition unit 131 has not acquired the measurement report from the automobile 12 (No at Step S202), the process returns to the process before Step S201.

On the other hand, in a case where the acquisition unit 131 has acquired the measurement report from the automobile 12 (Yes at Step S202), the estimation unit 133 estimates the location information on the automobile 12 whose location information is unknown by using both of the measurement report and the association information that has been generated by the generation unit 132 (Step S203).

### [6. Modification]

The information processing apparatus 100 described above may also be implemented with various kinds of embodiments other than the embodiments described above. Accordingly, in the following, another embodiment of the information processing apparatus 100 will be explained.

### [6-1. Moving body apparatus]

In the above described embodiment, a case of the automobile has been explained as an example, but another moving body apparatus may also be applicable instead of the automobile. The other moving body apparatus mentioned here is, for example, a bicycle, a bike, a bicycle that is provided by a bicycle sharing service, an automobile that is provided by a car sharing service, a drone, or the like. Furthermore, the moving body apparatus may also be an automobile or the like in a case where a non-connected car becomes a connected car by having mounted thereon a retrofitted communication device, a retrofitted information processing apparatus, or the like. Furthermore, the moving body apparatus may also be an autonomous driving car.

### [6-2. In-vehicle device]

In the above described embodiment, a case of the in-vehicle device has been explained as an example, but another terminal device may also be applicable instead of the in-vehicle device. Specifically, the terminal device may be a terminal device or the like that is used by a user who accesses content of a web page displayed on a browser, content for an application, or the like. For example, the terminal device may be a desktop type Personal Computer (PC), a notebook type PC, a tablet terminal, a mobile phone, a Personal Digital Assistant (PDA), a wearable device (Wearable Device), or the like.

### [6-3. Another base station]

In the above described embodiment, a case has been explained as an example in which the base station 20 performs wireless communication with the automobile 11 and the automobile 12, but the example is not limited to this example. In a case where each of the automobile 11 and the automobile 12 performs wireless communication with the different base station 20, the location information on the automobile 12 may be estimated.

In the following, the base station is referred to as a base station 2N for each base station, and in a case where the base station 2N is not particularly distinguished, the base station is referred to as the base station 20.

For example, it is assumed that a base station 21 performs wireless communication with the automobile 11, and a base station 22 performs wireless communication with the automobile 12. Furthermore, it is assumed that the automobile 12 is the automobile 10 whose location information is unknown. In this case, the acquisition unit 131 acquires the measurement report from the automobile 12. Then, the estimation unit 133 estimates the subject location information on the automobile 12 by using the measurement report and the association information.

To give a more specific example, in a case where a difference between the RSRP that is included in the association information and the RSRP that is included in the measurement report that has been acquired from the automobile 12 is within the range of the predetermined value, the estimation unit 133 decides the location information corresponding to the RSRP that is included in the association information as the location information on the automobile 12. In this way, the estimation unit 133 estimates the location information on the automobile 12.

As a result of this, the estimation unit 133 is able to estimate, on the basis of the measurement report, the location information on the automobile 12 that performs wireless communication with the base station 22.

### [6-4. Location information]

In the above described embodiment, a case has been explained as an example in which the in-vehicle device detects the current location by using the GPS, but the example is not limited to this example. For example, the in-vehicle device may estimate the current location on the automobile 10 by using the location information on the base station 20 that is performing the wireless communication, the radio wave for WiFi (registered trademark) (Wireless Fidelity), or the like.

### [6-5. Road location information]

In the above described embodiment, a case has been explained as an example in which the location information is the location information that has been detected by the GPS sensor, but the example is not limited to this example. For example, the location information may be the road location information that is indicated by the road in which the automobile 10 is located.

Here, the road location information will be explained. The road location information is location information indicated in a case where the map information is associated with the road network data. For example, in a case where the road in which the automobile 10 is running is represented by a combination of a node that indicates a feature point of the road and a link that indicates the road, the ID for the road location information that is different for each link is assigned in advance. At this time, the road location information corresponding to this kind of ID is set in advance.

Furthermore, the information processing apparatus 100 converts, in a map matching process, the location information (latitude longitude information) that is related to the GPS and that has been acquired by the automobile 10 to a link ID and a node ID. Consequently, this provides an effect of suppressing a GPS positioning error. Moreover, the map matching process may be performed by the automobile 10. For example, the advantage of the information processing apparatus 100 performing the map matching process is that the load applied to the automobile 10 is reduced because there is no need for the automobile 10 to have both of a map matching process function and a storage for the map information. Furthermore, as a result of the information processing apparatus 100 performing the map matching process, it is also possible to applicable to a terminal device (for example, a smartphone, etc.) other than the automobile 10. Furthermore, the map information is unified, so that it is possible to erase the difference between the types of the map information or between old and new map information.

In such a case, the generation unit 132 generates, on the basis of the road location information and the measurement report that has been acquired from the automobile 10, the association information in which the subject road location information is associated with the measurement report. For example, the generation unit 132 generates the association information in which the road location information on the automobile 10 is associated with the cell ID, the RSRP, and the like from among the pieces of data included in measurement report.

Then, in a case where the difference between the RSRP that is included in the association information and the RSRP that is included in the measurement report that has been acquired from the automobile 10 whose road location information is unknown is within the range of the predetermined value, the estimation unit 133 decides the road location information corresponding to the RSRP included in the association information as the location information on the automobile 10. In this way, the estimation unit 133 estimates the location information on the automobile 10. As a result of this, the estimation unit 133 is able to estimate the road location information on the automobile 10 on the basis of the measurement report.

### [6-6. Training model]

Furthermore, the generation unit 132 further generates, on the basis of the location information on the automobile 11 and the measurement report that has been acquired from the automobile 11, a training model that has been trained to output the location information on the automobile 12 by inputting the measurement report that has been acquired from the automobile 12.

To give a more specific example, by inputting both of the cell ID and the RSRP from among the pieces of data included in the measurement report that has been acquired from the automobile 12, the generation unit 132 generates the training model that outputs the location information on the automobile 12. Then, the generation unit 132 stores the generated training model in the storage unit 120.

For example, the generation unit 132 performs a training process by using a method of backpropagation (error backpropagation technique), or the like. For example, the generation unit 132 adjusts a weight value that is considered at the time of transmission of a value between the nodes performed in the training process. In this way, the generation unit 132 trains the training model by performing a process of backpropagation or the like that corrects the parameters so as to reduce an error between an output from the training model and a correct answer corresponding to an input. For example, the generation unit 132 generates the training model by performing the process of backpropagation or the like such that a predetermined loss function is minimized. In this way, the generation unit 132 performs the training process for training the parameters for the training model.

As a result of this, the generation unit 132 according to the embodiment estimates the location information on the automobile 12 on the basis of the training model, so that the generation unit 132 is able to estimate the location information on the automobile 12 on the basis of the measurement report.

Moreover, the training model is not limited to the above described modification. For example, the training model may be a training model that outputs the location information on the automobile 12 by inputting the cell ID and the RSRP from among the pieces of data included in the measurement report that has been acquired from the subject automobile 12 and the map information. Here, this kind of map information is the one acquired by the acquisition unit 131 from a predetermined information providing server that provides the map information.

Furthermore, the training model may be a training model that outputs the location information on the automobile 12 by inputting the cell ID and the RSRQ from among the pieces of data included in the measurement report that has been acquired from the subject automobile 12.

Furthermore, the training model may be a training model that outputs the location information on the automobile 12 by inputting the cell ID, the RSRQ from among the pieces of data included in the measurement report that has been acquired from the subject automobile 12 and the map information.

In this way, the training model may be any training model as long as the training model that outputs the location information in a case where the information that is related to the location information from among the pieces of data included in the measurement report has been input is used.

### [6-7. Handover probability]

Furthermore, the estimation unit 133 further estimates, by using both of the measurement report and the association information, a handover probability that is a probability that the automobile 10 performs a handover to another base station that is different from the base station 20.

For example, in the association information, the location information on the automobile 10 obtained at a certain time is associated with the base station 20 that had been performed wireless communication at a location of the automobile 10 from the cell ID or the like. In other words, the association information includes the location information on the automobile 10 obtained at the certain time and the information that is related to the association relationship with the base station 20. Specifically, the association information includes the location and the time in which a handover is performed from the base station 21 in which the automobile 10 performs wireless communication to the base station 22 that is adjacent to the base station 21.

In such a case, the estimation unit 133 estimates, on the basis of association relationship between the location information on the automobile 10 obtained at the certain time included in the association information and the base station 20, a handover probability that the automobile 10 that is located at such a location performs a handover from the base station 21 to the base station 22.

To give a more specific example, it is assumed that the automobile 10 is an automobile whose location information is unknown. In this case, in a case where a difference between the RSRP that is included in the association information and the RSRP that is included in the measurement report that has been acquired from the automobile 10 whose location information is unknown is within the range of the predetermined value, the estimation unit 133 decides the location information corresponding to the RSRP included in the association information as the location information on the automobile 10. In this way, the estimation unit 133 estimates the location information on the automobile 10.

Then, the estimation unit 133 estimates a handover probability that the automobile 10 performs a handover from the base station 21 to the base station 22, on the basis of the estimated location information on the automobile 10 and a correspondence relationship between the location information at the certain time indicated in the association relationship and the base station 20.

In this way, the estimation unit 133 is able to estimate the handover probability of the automobile 12 on the basis of the measurement report. As a result of this, the estimation unit 133 is able to suppress an unnecessary handover. For example, as a result of the base station 20 activating only a specific band with respect to the automobile 10, it is possible to suppress an unnecessary handover. Furthermore, by performing control availability of a handover to be performed on the adjacent base station 20 (for example, the base station 20 that is located at the change destination and that is changed due to the handover, etc.), it is possible to suppress an unnecessary handover. In this way, the information processing apparatus 100 is able to reduce an instantaneous power interruption caused by a handover. Furthermore, the information processing apparatus 100 is able to contribute to suppression of Tracking Area Update (TAU) signaling.

### [7. Hardware configuration]

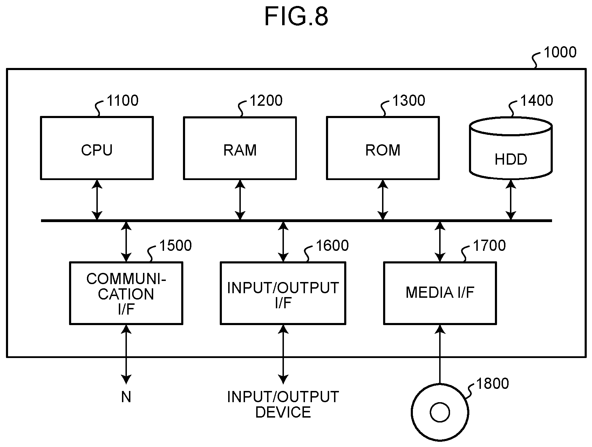

Furthermore, the automobile 10, the base station 20, the external server 30, and the information processing apparatus 100 according to the embodiment described above are implemented by, for example, a computer 1000 having a configuration illustrated in FIG. 8. In the following, an explanation will be made by using the information processing apparatus 100 as an example. FIG. 8 is a diagram of a hardware configuration illustrating one example of the computer 1000 that implements the function of the information processing apparatus 100. The computer 1000 includes a CPU 1100, a RAM 1200, a Read Only Memory (ROM) 1300, a Hard Disk Drive (HDD) 1400, a communication interface (I/F) 1500, an input/output interface (I/F) 1600, and a media interface (I/F) 1700.

The CPU 1100 operates on the basis of the program stored in the ROM 1300 or the HDD 1400, and performs control of each of the units. The ROM 1300 stores therein a boot program executed by the CPU 1100 at the time of activation of the computer 1000, a program that depends on the hardware of the computer 1000, and the like.

The HDD 1400 stores therein the program executed by the CPU 1100, data used by the program, and the like. The communication interface 1500 receives data from another device via the network N, sends the received data to the CPU 1100, and then transmits the data generated by the CPU 1100 to the other device via the network N.

The CPU 1100 controls an output device, such as a display or a printer, and an input device, such as a keyboard or a mouse, via the input/output interface 1600. The CPU 1100 acquires the data from the input device via the input/output interface 1600. Furthermore, the CPU 1100 outputs the generated data to the output device via the input/output interface 1600.

The media interface 1700 reads the program or the data stored in a recording medium 1800 and provides the read program or data to the CPU 1100 via the RAM 1200. The CPU 1100 loads the program into the RAM 1200 from the recording medium 1800 via the media interface 1700 and executes the loaded program. The recording medium 1800 is, for example, an optical recording medium, such as a digital versatile disk (DVD), a magneto optical recording medium, such as a magneto optical disk (MO), a tape medium, a magnetic recording medium, or a semiconductor memory.

For example, in a case where the computer 1000 functions as the information processing apparatus 100 according to the embodiment, the CPU 1100 included in the computer 1000 executes the program loaded in the RAM 1200 and implements the functions of the control unit 130. Furthermore, in the HDD 1400, the data stored in the storage unit 120 is stored. The CPU 1100 included in the computer 1000 reads these programs from the recording medium 1800 and executes the programs, but, as another example, the CPU 1100 may acquire these programs from a different device via the network N.

### [8. Others]

Furthermore, of the processes described in the embodiment, the whole or a part of the processes that are mentioned as being automatically performed can also be manually performed, whereas the whole or a part of the processes that are mentioned as being manually performed can also be automatically performed using known methods. Furthermore, the flow of the processes, the specific names, and the information containing various kinds of data or parameters indicated in the above specification and drawings can be arbitrarily changed unless otherwise stated. For example, the various kinds of information illustrated in each of the drawings are not limited to the information illustrated in the drawings.

Furthermore, the components of each device illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, the base station 20 may also have each of the configurations of the information processing apparatus 100. In this case, the base station 20 may also perform various kinds of information processes that are performed by the information processing apparatus 100.

Furthermore, each of the embodiments described above can be appropriately used in combination as long as the processes do not conflict with each other.

Furthermore, the "components (sections, modules, units)" described above can be read as "means", "circuits", or the like. For example, the estimation unit can be read as an estimation means, an estimation circuit, or the like.

### [9. Effects]

As described above, the information processing apparatus 100 according to the embodiment includes the association information storage unit 121 (one example of a storage unit), the acquisition unit 131, and the estimation unit 133. The association information storage unit 121 stores therein association information in which the location information on the first moving body apparatus is associated with the first control message that is a control message that is used to maintain wireless communication performed between the first moving body apparatus and the base station 20. The acquisition unit 131 acquires the second control message that is the control message between the second moving body apparatus that is different from the first moving body apparatus and the base station 20. The estimation unit 133 uses the second control message and the association information, and estimates the location information on the second moving body apparatus.

In this way, the information processing apparatus 100 according to the embodiment estimates the location information on the second moving body apparatus by using both of the second control message and the association information, so that the information processing apparatus 100 is able to estimate the location information on the second moving body apparatus on the basis of the predetermined control message.

Furthermore, in the information processing apparatus 100 according to the embodiment, the acquisition unit 131 acquires, as the first control message, the first measurement report that is the measurement report that is transmitted by the first moving body apparatus to the base station 20, and acquires, as the second control message, the second measurement report that is the measurement report that is transmitted by the second moving body apparatus to the base station 20.

As a result of this, the information processing apparatus 100 according to the embodiment is able to acquire the control message that is needed to estimate the location information on the second moving body apparatus.

Furthermore, in the information processing apparatus 100 according to the embodiment, the generation unit 132 that generates, on the basis of the location information on the first moving body apparatus and the first measurement report, the association information in which the location information on the first moving body apparatus is associated with the first measurement report is further provided, and the association information storage unit 121 stores therein the association information that has been generated by the generation unit 132.

As a result of this, the information processing apparatus 100 according to the embodiment is able to suitably generate the association information that is used to estimate the location information on the second moving body apparatus.

Furthermore, in the information processing apparatus 100 according to the embodiment, the generation unit 132 further generates, on the basis of the location information on the first moving body apparatus and the first measurement report related to the first moving body apparatus, a training model that has been trained to output the location information on the second moving body apparatus by inputting the second measurement report, the association information storage unit 121 further stores therein the training model that has been generated by the generation unit 132, and the estimation unit 133 estimates the location information on the second moving body apparatus by inputting the second measurement report to the training model.

As a result of this, the information processing apparatus 100 according to the embodiment estimates the location information on the second moving body apparatus on the basis of the training model, so that the information processing apparatus 100 is able to estimate the location information on the second moving body apparatus on the basis of the predetermined control message.

Furthermore, in the information processing apparatus 100 according to the embodiment, the estimation unit 133 estimates, as the location information on the second moving body apparatus, the location information that has been detected by the predetermined sensor included in the second moving body apparatus.

As a result of this, the information processing apparatus 100 according to the embodiment is able to estimate the location information that has been detected by the predetermined sensor included in the second moving body apparatus on the basis of the predetermined control message.

Furthermore, in the information processing apparatus 100 according to the embodiment, the estimation unit 133 estimates, as the location information on the second moving body apparatus, the road location information that indicates the road in which the second moving body apparatus is located.

As a result of this, the information processing apparatus 100 according to the embodiment is able to estimate the road location information on the second moving body apparatus on the basis of the predetermined control message.

Furthermore, in the information processing apparatus 100 according to the embodiment, the estimation unit 133 uses both of the second control message and the association information, and further estimates a handover probability pf a probability that the second moving body apparatus performs a handover to the base station 20 that is different from the base station 20.

As a result of this, the information processing apparatus 100 according to the embodiment is able to estimate the handover probability of the second moving body apparatus on the basis of the predetermined control message.

Furthermore, in the information processing apparatus 100 according to the embodiment, the acquisition unit 131 acquires the second control message from the second moving body apparatus that performs wireless communication with the base station 20 that is different from the base station 20, and the estimation unit 133 uses both of the second control message and the association information, and estimates the location information on the second moving body apparatus.

As a result of this, the information processing apparatus 100 according to the embodiment is able to estimate the location information on the second moving body apparatus that performs wireless communication with the other base station on the basis of the predetermined control message.

In the above, some of embodiments of the present application have been described in detail based on the drawings, but the embodiments are described only by way of an example, and the present invention may be implemented in a mode in which various modifications and improvements have been made on the basis of the aspects described in the section of the disclosure of the present invention and the knowledge of those skilled in the art.

### Reference Signs List

- N: network
- 1: information processing system
- 10, 11, 12: automobile
- 20, 21, 22: base station
- 30: external server
- 100: information processing apparatus
- 110: communication unit
- 120: storage unit
- 121: association information storage unit
- 122: estimation location information storage unit
- 130: control unit
- 131: acquisition unit
- 132: generation unit
- 133: estimation unit
- 134: providing unit

## Claims

1. An information processing apparatus comprising:
a storage unit that stores therein association information in which location information on a first moving body apparatus is associated with a first control message that is a control message that is used to maintain wireless communication between the first moving body apparatus and a base station;
an acquisition unit that acquires a second control message that is the control message between a second moving body apparatus that is different from the first moving body apparatus and the base station; and
an estimation unit that estimates location information on the second moving body apparatus by using the second control message and the association information.

2. The information processing apparatus according to claim 1, wherein the acquisition unit acquires, as the first control message, a first measurement report that is a measurement report that is transmitted by the first moving body apparatus to the base station, and acquires, as the second control message, a second measurement report that is the measurement report that is transmitted by the second moving body apparatus to the base station.

3. The information processing apparatus according to claim 2, further comprising
a generation unit that generates, based on the location information on the first moving body apparatus and the first measurement report, association information in which the location information on the first moving body apparatus is associated with the first measurement report, wherein
the storage unit stores therein the association information that has been generated by the generation unit.

4. The information processing apparatus according to claim 3, wherein
the generation unit further generates, based on the location information on the first moving body apparatus and the first measurement report transmitted from the first moving body apparatus, a training model that has been trained to output the location information on the second moving body apparatus by inputting the second measurement report,
the storage unit further stores therein the training model that has been generated by the generation unit, and
the estimation unit estimates the location information on the second moving body apparatus by inputting the second measurement report to the training model.

5. The information processing apparatus according to claim 1, wherein the estimation unit estimates, as the location information on the second moving body apparatus, the location information that has been detected by a predetermined sensor included in the second moving body apparatus.

6. The information processing apparatus according to claim 1, wherein the estimation unit estimates, as the location information on the second moving body apparatus, road location information that is indicated by a road in which the second moving body apparatus is located.

7. The information processing apparatus according to claim 1, wherein the estimation unit further estimates, by using the second control message and the association information, a handover probability that is a probability that the second moving body apparatus performs a handover to another base station that is different from the base station.

8. The information processing apparatus according to claim 1, wherein
the acquisition unit acquires the second control message from the second moving body apparatus that performs the wireless communication with another base station that is different from the base station, and
the estimation unit estimates the location information on the second moving body apparatus by using the second control message and the association information.

9. An information processing method executed by a computer, the information processing method comprising:
a storing step of storing therein association information in which location information on a first moving body apparatus is associated with a first control message that is a control message that is used to maintain wireless communication between the first moving body apparatus and a base station;
an acquiring step of acquiring a second control message that is the control message between a second moving body apparatus that is different from the first moving body apparatus and the base station; and
an estimating step of estimating location information on the second moving body apparatus by using the second control message and the association information.

10. An information processing program that causes a computer to execute a process comprising:
a storing step of storing therein association information in which location information on a first moving body apparatus is associated with a first control message that is a control message that is used to maintain wireless communication between the first moving body apparatus and a base station;
an acquiring step of acquiring a second control message that is the control message between a second moving body apparatus that is different from the first moving body apparatus and the base station; and
an estimating step of estimating location information on the second moving body apparatus by using the second control message and the association information.
